Europäisches Patentamt

European Patent Office

Office européen des brevets

(19)

(11) Veröffentlichungsnummer: **0 289 760 B1**

## (12) EUROPÄISCHE PATENTSCHRIFT

(45) Veröffentlichungstag der Patentschrift: **11.09.91**

(51) Int. Cl.⁵: **B26D 7/00**, //F16C25/08

(21) Anmeldenummer: **88104366.5**

(22) Anmeldetag: **18.03.88**

(54) **Antriebs- und Lageranordnung für den Schneidekopf einer Circularschneidmaschine.**

(30) Priorität: 22.04.87 DE 3713536

(43) Veröffentlichungstag der Anmeldung:
09.11.88 Patentblatt 88/45

(45) Bekanntmachung des Hinweises auf die
Patenterteilung:
11.09.91 Patentblatt 91/37

(84) Benannte Vertragsstaaten:
AT BE CH DE ES FR GB GR IT LI LU NL SE

(56) Entgegenhaltungen:
DE-C- 480 332
JP-A-58 222 993
US-A- 2 752 968

(73) Patentinhaber: **Weber, Günther**
**Oberer Birkenweg 176**
**W-3560 Biedenkopf-Wallau(DE)**

(72) Erfinder: **Weber, Günther**
**Oberer Birkenweg 17b**
**W-3560 Biedenkopf-Wallau(DE)**
Erfinder: **Heinze, Horst**
**Erfurter Strasse 28**
**W-3559 Battenberg/Eder(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**W-8000 München 22(DE)**

## Beschreibung

Die Erfindung betrifft eine Antriebs- und Lageranordnung für einen Schneidkopf einer Circularschneidmaschine mit einer bezüglich des Maschinengestells drehbar gelagerten Hauptwelle, an der ein Trägerorgan für eine bezüglich der Hauptwelle exzentrisch angeordnete, ein fliegend gelagertes scheibenförmiges Schneidmesser tragende Messerwelle befestigt ist, sowie einem Haupt- und Messerwelle mit zumindest einem Antrieb verbindenden, die Antriebskraft übertragenden Organ, wobei die Messerwelle über Radialkräfte aufnehmende Lager gelagert ist,
Circularschneidmaschinen, die auch Slicer genannt werden, dienen zum Aufschneiden von Lebensmittelprodukten, insbesondere Wurst, Schinken, Speck, Fleisch, Käse und dergleichen.

Von deartigen Maschinen, die mit sehr hoher Schneidfolge arbeiten, werden exakte Schnitte praktisch unabhängig von der Art des jeweils aufzuschneidenden Gutes gefordert, das heißt es muß auch möglich sein, vergleichsweise harte und insbesondere auch gekühlte Materialien im Langzeitbetrieb exakt aufzuschneiden. Dies setzt voraus, daß das planetarisch und um seine eigene Achse rotierende, scheibenförmige Schneidmesser äußerst exakt geführt bzw. gelagert ist und daß verschleißbedingte Verschlechterungen der Lagerung weitestgehend ausgeschaltet werden, da sonst die hohen Anforderungen an die Schnittqualität und die Exaktheit der Einzelschnitte nicht gewährleistet werden kann. Die Erfüllung dieser Forderung ist vor allem deshalb problematisch, weil während der Schneidvorgänge bei jedem Auftreffen des Messers auf das aufzuschneidende Gut in Abhängigkeit von dem jeweiligen Gut mehr oder weniger starke Schläge auftreten und außerdem die sich im Betrieb im Schneidkopf ergebenden Temperaturerhöhungen Schneidungenauigkeiten zur Folge haben können.

Eine Antriebs- und Lageranordnung der eingangs angegebenen Art ist aus der DE-C-480 332 bekannt. Problematisch bei derartigen Lageranordnungen ist, daß das scheibenförmige Schneidmesser äußerst exakt geführt bzw. gelagert sein muß, um bei hoher Genauigkeit exakte Schnitte erzielen zu können. verschleißbedingte Verschlechterungen der Lagerung sowie Veränderungen der Lagertemperatur müssen hierbei weitgehend ohne Einfluß auf die durchgeführten Schnitte bleiben. Dies läßt sich mit der bekannten Anordnung, bei der die Messerwelle in zwei gegenseitig beabstandeten Kugellagern gelagert ist, nicht erreichen.

Aufgabe der Erfindung ist es, eine Antriebs- und Lageranordnung der eingangs angegebenen Art in der Weise auszubilden, daß trotz der fliegenden Lagerung des Schneidmessers und der auftretenden Schläge auf das Schneidmesser verschleiß- und / oder temperaturbedingte Veränderungen in der Lageranordnung ohne Auswirkungen auf die Genauigkeit der durchgeführten Schnitte bleiben und eine hohe Standzeit der Schneidmesserlagerung erreicht wird.

Erfindungsgemäß wird diese Aufgabe dadurch gelöst, daß ein nur Radialkräfte aufnehmendes Lager messerseitig angeordnet ist, daß direkt angrenzend an dieses Lager eine sowohl Radialkräfte als auch Axialkräfte aufnehmende Lagereinheit vorgesehen ist und daß die Innen- und Außenringe aller Lager in Axialrichtung spielfrei verspannt sind.

Durch diese Art der Lagerung der Messerwelle wird einerseits eine optimale Aufnahme der von hohen Fliehkräften und bei Schnittvorgängen auftretenden Schlägen herrührenden Kräfte erzielt und andererseits durch die völlig spielfreie Axiallagerung eine ungewöhnlich hohe Lebensdauer bei temperaturunabhängiger Genauigkeit gewährleistet.

Vorzugsweise wird für das zur Radialkraftaufnahme bestimmte messerseitige Lager ein kräftiges Zylinderrollenlager verwendet, während die unmittelbar angrenzende Lagereinheit bevorzugt aus zwei Schrägkugellagern besteht, die stirnseitig aneinanderliegen und deren Innenringe beim axialen Verspannen zur Anlage gelangen, wobei gleichzeitig die Kugeln gegen ihre entsprechenden Schultern gepreßt werden und auf diese Weise jegliches Axialspiel ausgeschlossen wird.

Die Axialverspannung der Außenringe der Lager erfolgt bevorzugt mittels einer messerseitig mit dem Trägerorgan verschraubbaren Spannringscheibe, wobei als Gegenlager der Boden eines mit dem Trägerorgan fest verbundenen Lagertopfes dient. Die Innenringe der unmittelbar aneinander angrenzenden Lager werden mittels einer Spannmutter in Axialrichtung spielfrei verspannt, welche auf das vom Messer abgewandte Ende der Messerwelle geschraubt wird und die insbesondere über eine Antriebsringscheibe und eine Spannhülse auf die Lagerinnenringe einwirkt, welche messerseitig an einer Schulter eines Messerträgers abgestützt sind. Es wird auf diese Weise eine äußerst kompakte Anordnung erhalten, d.h. es kann auch eine sehr kurze Messerwelle Verwendung finden, die keine unerwünschten Kipptendenzen zur Folge hat. Die mit dem Trägerorgan fest verbundene Hauptwelle ist in einer gestellfesten Trägerbuchse mittels über eine Distanzhülse beabstandete Lager gelagert, wobei zumindest die trägerorganseitig gelegenen Lager bezüglich ihrer Innen- und Außenringe in Axialrichtung ebenfalls spielfrei gegeneinander verspannt sind und vorzugsweise aus Schrägkugellagern bestehen.

Weitere besonders vorteilhafte Ausgestaltungen der Erfindung sind in Unteransprüchen angegeben.

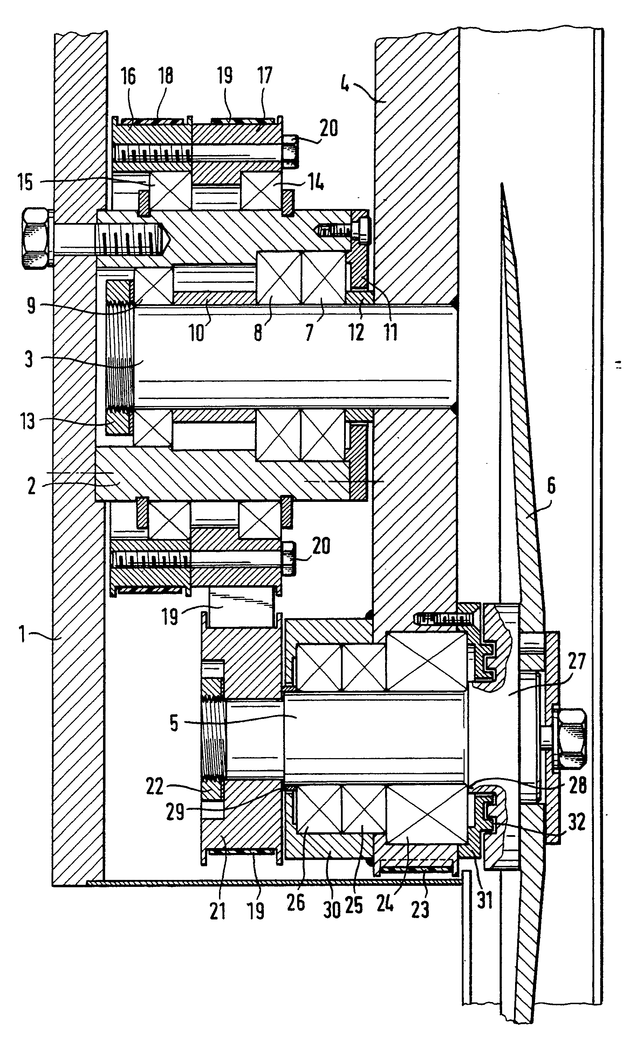

Ein Ausführungsbeispiel der Erfindung wird nachfolgend unter Bezugnahme auf die Zeichnung erläutert;

Die einzige Figur der Zeichnung zeigt eine Teil-Axialschnittdarstellung eines Schneidkopfes mit einer erfindungsgemäß ausgebildeten Antriebs- und Lageranordnung.

Die Zeichnung zeigt einen Teil eines stabil ausgeführten Maschinengestells 1, an dem über eine vorzugsweise mit dem Maschinengestell 1 verschraubte Trägerbuchse 2 eine Hauptwelle 3 des Schneidkopfes gelagert ist.

Diese Hauptwelle 3 trägt an der vom Maschinengestell 1 abgewandten Seite ein Trägerorgan 4, das in Form einer angetriebenen Scheibe ausgebildet ist und in dem randseitig und damit exzentrisch eine Messerwelle 5 gelagert ist, die ein parallel zum Trägerorgan 4 gelegenes Scheibenmesser 6 trägt.

Die Hauptwelle 3 ist in der Trägerbuchse 2 über ein Paar aneinandergrenzender Schrägkugellager 7, 8, die trägerorganseitig gelegen sind, und ein dimensional kleineres Schrägkugellager 9 im Bereich des von dem Trägerorgan 4 abgewandten Endes der Hauptwelle 3 gelagert. Zwischen den beabstandeten Lagern 8, 9 ist eine Distanzhülse 10 vorgesehen, und eine weitere Stützhülse 12 befindet sich zwischen dem Kugellager 7 und dem Trägerorgan 4. Auf diese Weise ist es möglich, mittels einer Spannmutter 13, die endseitig auf die Hauptwelle 3 aufschraubbar ist, alle Innenringe der Kugellager 7, 8, 9 axial spielfrei zu verspannen.

Auch die Außenringe der beiden aneinanderliegenden Schrägkugellager 7, 8 sind in Axialrichtung spielfrei verspannt, und zwar mittels einer Stützringscheibe 11, die mit der Trägerbuchse 2 verschraubt wird und dabei die Außenringe gegen einen Ringansatz der Trägerbuchse 2 preßt.

Auf der Trägerbuchse 2 sind ferner über Kugellager 14, 15 Antriebsringe 16, 17 drehbar gelagert, welche durch Schrauben 20 gegenseitig fixiert sind.

Vorzugsweise mittels eines Zahnriemens 18 wird der Antriebsring 16 in Drehung versetzt, nimmt dabei den benachbarten Antriebsring 17 mit, der wiederum vorzugsweise über einen Zahnriemen 19 mit einer Antriebsringscheibe 21 gekuppelt ist, welche drehfest auf der Messerwelle 5 befestigt ist.

Die über die Antriebsringscheibe 21 antreibbare Messerwelle 5 ist im Trägerorgan 4 messerseitig über ein zur Aufnahme von Radialkräften ausgebildetes, vorzugsweise aus einem Zylinderrollenlager bestehendes Lager 24 sowie eine unmittelbar angrenzend angebrachte Lagereinheit gelagert, welche bevorzugt aus zwei Schrägkugellagern 25, 26 besteht. Während das zur Aufnahme der Radialkräfte dienende Lager 24 zumindest weitgehend unmittelbar in der Trägerscheibe 4 aufgenommen ist, befinden sich die beiden Schrägkugellager 25, 26 in einem Lagertopf 30, der fest mit dem Trägerorgan 4 verbunden, insbesondere verschweißt ist, so daß beispielsweise durch einen Ausdrehvorgang exakte Lageraufnahmen geschaffen werden können. Das Zylinderrollenlager 24 ist dimensional deutlich größer ausgeführt als die einzelnen Schrägkugellager 25, 26. Der Innenring des Zylinderrollenlagers 24 liegt messerseitig an einer Schulter 28 eines Messerträgers 27 an. Sämtliche Innenringe der Lager 24, 25, 26 sind in Axialrichtung spielfrei verspannt, und zwar mittels der Spannmutter 22 über die Antriebsringscheibe 21 und eine Spannhülse 29.

In entsprechender Weise sind die Außenringe der Kugellager 24, 25, 26 in Axialrichtung spielfrei gegeneinander verspannt, und zwar mittels einer Spannringscheibe 31, die messerseitig mit dem Trägerorgan 4 verschraubt wird. Gegen den Spanndruck abgestützt sind die Außenringe der Kugellager am Boden des Lagertopfs 30. In Radialrichtung sind die Lager passend aufgenommen bzw. abgestützt.

Die Messerwelle 5 besitzt geringe Länge, und der Schwerpunkt der rotierenden Teile von Messer, Messerwelle und umlaufenden Teilen liegt im Bereich des Spindelrollenlagers 24. Wesentlich ist auch, daß die gemäß der Erfindung erreichte Spielfreiheit stets gegeben ist und nicht erst bei erhöhter Betriebstemperatur erreicht wird.

Um zu verhindern, daß bei erhöhter Betriebstemperatur aus dem Messerwellenlager Fett austritt, ist ein Labyrinth 32 zwischen dem Messerträger 17 und der Spannringscheibe 31 ausgebildet, und dieses Labyrinth wird mit Dichtfett geschlossen.

Die erfindungsgemäße Ausgestaltung einer Antriebs- und Lageranordnung für den Schneidkopf eines Slicers zeichnet sich durch äußerste Robustheit, hohe Lebensdauer und während dieser hohen Lebensdauer gewährleistete Exaktheit der Messerführung und damit durch entsprechende Schnittgenauigkeit und Schnittkonstanz aus.

**Bezugszeichenliste:**

| 1. | Maschinengestell |
|---|---|
| 2. | Trägerbuchse |
| 3. | Hauptwelle |
| 4. | Trägerorgan |
| 5. | Messerwelle |
| 6. | Scheibenmesser |
| 7. | Kugellager |
| 8. | Kugellager |
| 9. | Kugellager |
| 10. | Distanzhülse |
| 11. | Stützringscheibe |

12. Stützhülse
13. Spannmutter
14. Kugellager
15. Kugellager
16. Antriebsring
17. Antriebsring
18. Zahnriemen
19. Zahnriemen
20. Schraube
21. Antriebsringscheibe
22. Spannmutter
23. Zahnriemen
24. Radialkraftlager
25. Kugellager
26. Kugellager
27. Messerträger
28. Schulter
29. Spannhülse
30. Lagertopf
31. Spannringscheibe
32. Labyrinthdichtung

**Patentansprüche**

1. Antriebs- und Lageranordnung für einen Schneidkopf einer Circularschneidmaschine mit einer bezüglich des Maschinengestells (1) drehbar gelagerten Hauptwelle (3), an der ein Trägerorgan (4) für eine bezüglich der Hauptwelle (3) exzentrisch angeordnete, ein fliegend gelagertes scheibenförmiges Schneidmesser (6) tragende Messerwelle (5) befestigt ist, sowie einem Haupt- und Messerwelle mit zumindest einem Antrieb verbindenden, die Antriebskraft übertragenden Organ (18, 19), wobei die Messerwelle (5) über Radialkräfte aufnehmende Lager gelagert ist, dadurch **gekennzeichnet,** daß ein nur Radialkräfte aufnehmendes Lager (24) messerseitig angeordnet ist, daß direkt angrenzend an dieses Lager (24) eine sowohl Radialkräfte als auch Axialkräfte aufnehmende Lagereinheit (25, 26) vorgesehen ist und daß die Innen- und Außenringe aller Lager (24, 25, 26) in Axialrichtung spielfrei verspannt sind.

2. Anordnung nach Anspruch 1, dadurch **gekennzeichnet,** daß das zur Radialkraftaufnahme bestimmte messerseitige Lager (24) aus einem Zylinderrollenlager besteht.

3. Anordnung nach Anspruch 1 oder 2, dadurch **gekennzeichnet,** daß die zur Aufnahme von Radial- und Axialkräften bestimmte Lagereinheit aus zwei aneinandergrenzenden Kugellagern (25, 26) insbesondere aus Schrägkugellagern bzw. Zylinderrollenlagern besteht.

4. Anordnung nach einem oder mehreren der vorhergehenden Ansprüche, dadurch **gekennzeichnet,** daß der Außendurchmesser des messerseitig gelegenen, zur Radialkraftaufnahme bestimmten Kugellagers (24) größer ist als der Außendurchmesser der Kugellager (25, 26) der Lagereinheit, und daß dieses zur Aufnahme von Radialkräften bestimmte Lager (24) messerseitig etwas überstehend im Trägerorgan (4) aufgenommen ist.

5. Anordnung nach einem oder mehreren der vorhergehenden Ansprüche, dadurch **gekennzeichnet,** daß die Außenringe der Lager (25, 26) der Lagereinheit in einem mit dem Trägerorgan (4) fest verbundenen Lagertopf (30) aufgenommen, über den Topfboden abgestützt und in Axialrichtung über den Außering des Radialkraftlagers (24) spielfrei verspannt sind, der in Axialrichtung durch eine messerseitig gelegene Spannringscheibe (31) beaufschlagt ist, welche mit dem Trägerorgan (4) verschraubt ist.

6. Anordnung nach einem oder mehreren der vorhergehenden Ansprüche, dadurch **gekennzeichnet,** daß die Innenringe der Kugellager (25, 26) der Lagereinheit und des zur Radialkraftaufnahme bestimmten messerseitigen Lagers (24) mittels einer auf die Messerwelle (5) geschraubten Spannmutter (22) gegen eine Schulter (28) eines Messerträgers (27) in Axialrichtung spielfrei verspannt sind.

7. Anordnung nach Anspruch 6, dadurch **gekennzeichnet,** daß Messerwelle (5) und Messerträger (27) einteilig ausgebildet sind.

8. Anordnung nach einem der vorhergehenden Ansprüche, dadurch **gekennzeichnet,** daß die Spannmutter (22) über eine Antriebsringscheibe (21) und eine Spannhülse (29) auf die Innenringe der unmittelbar aufeinanderfolgend angeordneten Kugellager (24, 25, 26) einwirkt.

9. Anordnung nach einem der vorhergehenden Ansprüche, dadurch **gekennzeichnet,** daß zwischen der Spannringscheibe (31) und dem Messerträger (27) eine Labyrinthdichtung (32) ausgebildet ist.

10. Anordnung nach einem oder mehreren der vorhergehenden Ansprüche,
dadurch **gekennzeichnet,**
daß die axiale Länge der zur Radial- und Axialkraftaufnahme bestimmten Lagereinheit (25, 26) nur geringfügig größer ist als die axiale Länge des zur Radialkraftaufnahme bestimmten messerseitigen Lagers (24).

11. Anordnung nach einem der vorhergehenden Ansprüche,
dadurch **gekennzeichnet,**
daß die axiale Länge von Messerwelle (5) und Gesamtlagerung (24, 25, 26) derart gewählt ist, daß der Schwerpunkt der rotierenden Teile einschließlich des Messers (6) im Bereich des zur Radialkraftaufnahme bestimmten messerseitigen Lagers (24) gelegen ist.

12. Anordnung nach einem oder mehreren der vorhergehenden Ansprüche,
dadurch **gekennzeichnet,**
daß die mit dem Trägerorgan (4) fest verbundene Hauptwelle (3) in einer gestellfesten Trägerbuchse (2) mittels über eine Distanzhülse (10) beabstandete Lager (7, 8; 9) gelagert ist, wobei zumindest die trägerorganseitig gelegenen Lager (7, 8) bezüglich ihrer Innen- und Außenringe in Axialrichtung spielfrei gegeneinander verspannt sind.

13. Anordnung nach Anspruch 12,
dadurch **gekennzeichnet,**
daß trägerorganseitig zwei aneinandergrenzende Schrägkugellager (7, 8) vorgesehen sind und im Bereich des vom Trägerorgan abgewandten Endes der Hauptwelle (3) ein einziges Kugellager (9) vorgesehen ist.

14. Anordnung nach einem oder mehreren der vorhergehenden Ansprüche,
dadurch **gekennzeichnet,**
daß auf der Trägerbuchse (2) über gegenseitig beabstandete Kugellager (14, 15) zwei miteinander fest verbundene Antriebsringe (16, 17) gelagert sind, wobei der gestellseitig gelegene Antriebsring (16) mit dem Antriebsmotor unter der benachbarte Antriebsring (17) mit der mit der Messerwelle (5) fest verbundenen Antriebsringscheibe (21) gekuppelt ist.

## Claims

1. Drive and bearing arrangement for a cutting head of a circular cutting machine comprising a main shaft (3) which is rotatably journalled relative to the machine frame (1) and to which there is secured a carrier (4) for a knife shaft (5) which is eccentrically disposed relative to the main shaft (3) and carries an over-mounted disc-like cutting knife(6); and members (18, 19) which transmit the driving force and connect both the main shaft and the knife shaft with at least one drive, the knife shaft (5) being journalled via a bearing which is adapted to bear radial forces; characterised in that a bearing (24) adapted to bear only radial forces is arranged at the knife side; in that a bearing unit (25, 26) capable of bearing both radial and axial forces is provided directly adjacent the said bearing (24); and in that the inner and outer rings of all bearings (24, 25, 26) are clamped without play in the axial direction.

2. Arrangement in accordance with claim 1, characterised in that the knife side bearing (24) intended to bear radial forces consists of a cylinder roller bearing.

3. Arrangement in accordance with claim 1 or claim 2, characterised in that the bearing unit intended to bear radial and axial forces consists of two adjacent bore bearings (25, 26) in particular of angular contact ball bearings or cylinder roller bearings.

4. Arrangement in accordance with one or more of the preceding claims, characterised in that the outer diameter of the ball bearing (24) disposed at the knife side and intended to bear radial forces is larger than the outer diameter of the ball bearings (25, 26) of the bearing unit; and in that the said bearing (24) intended to bear radial forces is accommodated in the carrier fall and projects somewhat beyond it at the knife side.

5. Arrangement in accordance with one or more of the preceding claims, characterised in that the outer rings of the bearings (25, 26) of the bearing unit are accommodated in a bearing pot (30) which is fixedly connected with the carrier member (4), are braced against the base of the pot and are clamped without play in the axial direction via the outer ring of the radial force bearing (24) with the outer ring being loaded in the axial direction by a clamping ring (31) disposed at the knife side which is connected by screw means to the carrier member (4).

6. Arrangement in accordance with one or more of the preceding claims, characterised in that the inner rings of the ball bearings (25, 26) of the bearing unit and of the first bearing (24) provided at the knife side and intended to bear radial forces are clamped without play in the axial direction against a shoulder (28) of a knife carrier (27) by means of a clamping nut (22) screwed onto the knife shaft (5).

7. Arrangement in accordance with claim 6, characterised in that the knife shaft (5) and the knife carrier (27) are of one piece construction.

8. Arrangement in accordance with one of the preceding claims, characterised in that the clamping duct (22) acts via a drive pulley (21) and a clamping sleeve (29) on the inner rings of the ball bearings (24, 25, 26) which are arranged directly after one another.

9. Arrangement in accordance with one of the preceding claims, characterised in that a labyrinth seal (31) is formed between the clamping ring (31) and the knife carrier (27).

10. Arrangement in accordance with one or more of the preceding claims, characterised in that the axial length of the bearing unit (25, 26) intended to bear radial and axial forces is only fractionally greater than the axial length of the knife side bearing (24) intended to bear radial forces.

11. Arrangement in accordance with one of the preceding claims, characterised in that the axial length of the knife shaft (5) and of the overall bearing (24, 25, 26) is selected such that the central gravity of the rotating parts including the knife (6) is disposed in the region of the knife side bearing (24) intended to bear radial forces.

12. Arrangement in accordance with one or more of the preceding claims, characterised in that the main shaft (3) which is fixedly connected to the carrier (4) is journalled in a carrier sleeve (2) secured to the frame by means of bearings (7, 8; 9) which are spaced apart by distance sleeve (10), with at least the bearings (7, 8) disposed at the carrier side being clamped together with respect to their inner and outer rings in the axial direction without play.

13. Arrangement in accordance with claim 12, characterised in that two adjoining angular contact bearings (7, 8) are provided at the carrier side; and in that a single ball bearing (9) is provided in the region of the end of the main shaft (3) remote from the carrier.

14. Arrangement in accordance with one or more of the preceding claims, characterised in that two rigidly connected drive pulleys or rings (16, 17) are journalled on the carrier sleeve (2) via mutually spaced ball bearings (14, 15), with the drive ring (16) disposed at the frame side being coupled with the drive motor and with the adjacent drive ring (17) being coupled with the drive pulley (21) which is fixedly connected to the knife shaft (5).

**Revendications**

1. Ensemble d'entraînement et de paliers pour une tête de coupe d'une trancheuse circulaire, comprenant un arbre principal (3) monté rotatif sur un bâti de machine (1), un organe de support (4) fixé à l'arbre principal (3), pour supporter un arbre de couteau (5) agencé de façon excentrée par rapport à l'arbre principal (3) et portant un couteau (6) en forme de disque monté en porte-à-faux, ainsi qu'un organe (18, 19) reliant l'arbre principal et l'arbre de couteau à un entraînement et leur transmettant la force d'entraînement, l'arbre de couteau (5) étant monté par des paliers supportant des forces radiales, caractérisé en ce qu'un palier (24) supportant seulement des forces radiales est disposé du côté du couteau, en ce qu'une unité de palier (25, 26) supportant tant des forces radiales que des forces axiales est disposée directement ajacente à ce palier (24) et en ce que les bagues intérieures et extérieures de tous les paliers (24, 25, 26) sont préchargées sans jeu en direction axiale.

2. Ensemble selon la revendication 1, caractérisé en ce que le palier (24) disposé du côté du couteau et destiné à supporter des forces radiales consiste en un palier à rouleaux cylindriques.

3. Ensemble selon la revendication 1 ou 2, caractérisé en ce que l'unité de palier destinée à supporter des forces radiales et axiales consiste en deux paliers à billes contigus (25, 26), en particulier en des paliers à billes à portée oblique ou des paliers à rouleaux cylindriques.

4. Ensemble selon une ou plusieurs des revendications précédentes, caractérisé en ce que le diamètre extérieur du palier à billes (24) disposé du côté du couteau et destiné à supporter des forces radiales est supérieur au diamètre extérieur du palier à billes (25, 26) de l'unité de palier, et en ce que ce palier (24) destiné à supporter des forces radiales est reçu dans l'organe de support (4) légèrement en saillie du côté du couteau.

5. Ensemble selon une ou plusieurs des revendications précédentes, caractérisé en ce que les bagues extérieures des paliers (25, 26) de l'unité de palier sont reçues dans une coupelle de support (30) reliée fixement à l'organe de support (4), sont en appui sur le fond de la coupelle et sont préchargées en direction axiale sans jeu par la bague extérieure du palier à force radiale (24), cette bague extérieure étant sollicitée en direction axiale par un disque annulaire de serrage (31) qui est disposé du côté du couteau et vissé sur l'organe de support (4).

6. Ensemble selon une ou plusieurs des revendications précédentes, caractérisé en ce que les bagues intérieures des paliers à billes (25, 26) de l'unité de palier et du palier (24) destiné à supporter des forces radiales du côté du couteau sont préchargées en direction axiale sans jeu contre un épaulement (28) d'un porte-couteau (27) au moyen d'un écrou de serrage (22) vissé sur l'arbre de couteau (5).

7. Ensemble selon la revendication 6, caractérisé en ce que l'arbre de couteau (5) et le porte-couteau (27) sont réalisés d'une pièce.

8. Ensemble selon l'une des revendications précédentes, caractérisé en ce que l'écrou de serrage (22) agit sur les bagues intérieures des paliers à billes (24, 25, 26) disposés directement les uns derrière les autres via un disque annulaire d'entraînement (21) et une douille de serrage (29).

9. Ensemble selon l'une des revendications précédentes, caractérisé en ce qu'une étanchéité à chicanes (32) est formée entre le disque annulaire de serrage (31) et le porte-couteau (27).

10. Ensemble selon une ou plusieurs des revendications précédentes, caractérisé en ce que la longueur axiale de l'unité de palier (25, 26) destinée à supporter des forces radiales et axiales n'est qu'à peine supérieure à la longueur axiale du palier (24) côté couteau destiné à supporter des forces radiales.

11. Ensemble selon l'une des revendications précédentes, caractérisé en ce que la longueur axiale de l'arbre de couteau (5) et de l'ensemble des paliers (24, 25, 26) est choisie de telle manière que le centre de gravité des parties rotatives y compris le couteau (6), est situé dans la région du palier (24) destiné à supporter des forces radiales du côté du couteau.

12. Ensemble selon une ou plusieurs des revendications précédentes, caractérisé en ce que l'arbre principal (3) relié fixement à l'organe de support (4) est monté dans une douille porteuse (2) fixe par rapport au bâti au moyen de paliers (7, 8; 9) espacés sur une douille entretoise (10), au moins les paliers (7, 8) disposés du côté de l'organe de support étant préchargés en direction axiale sans jeu les uns contre les autres en ce qui concerne leurs bagues intérieures et extérieures.

13. Ensemble selon la revendication 12, caractérisé en ce que deux paliers (7, 8) à billes et à portées inclinées sont prévus l'un contre l'autre du côté de l'organe de support et en ce qu'il est prévu un palier à billes (9) unique dans la région de l'extrémité de l'arbre principal (3) éloignée de l'organe de support.

14. Ensemble selon une ou plusieurs des revendications précédentes, caractérisé en ce que deux anneaux d'entraînement (16, 17) reliés fixement l'un à l'autre sont montés sur la douille porteuse (2) au moyen de paliers à billes (14, 15) écartés l'un par rapport à l'autre, et en ce que l'anneau d'entraînement (16) situé du côté du bâti est couplé au moteur d'entraînement et l'anneau d'entraînement voisin (17) est couplé au disque annulaire d'entraînement (21) relié fixement à l'arbre de couteau (5).